# EUROPÄISCHE PATENTANMELDUNG

(11) **EP 3 335 969 A1**
(43) Veröffentlichungstag der Anmeldung: **20.06.2018**
(21) Anmeldenummer: 16204488.7
(22) Anmeldetag: 15.12.2016
(51) Int. Cl.: B62J 15/02

(54) **BEFESTIGUNGSVORRICHTUNG FÜR DIE ANBRINGUNG EINES RADSCHÜTZERS AN EINEM ZWEIRAD, INSBESONDERE AN EINEM FAHRRAD**

(71) Anmelder: SKS metaplast Scheffer-Klute GmbH, 59846 Sundern (DE)
(72) Erfinder: Kordes, Sven, 59846 Sundern (DE)
(74) Vertreter: Basfeld, Rainer

(57) **Zusammenfassung**

Befestigungsvorrichtung (16) für die Anbringung eines Radschützers (15) an einem Zweirad, insbesondere an einem Fahrrad, umfassend erste Verbindungsmittel (19) für die Verbindung der Befestigungsvorrichtung (16) mit dem Radschützer (15), sowie zweite Verbindungsmittel (20) für die Verbindung der Befestigungsvorrichtung (16) mit dem Rahmen des Zweirades, wobei die zweiten Verbindungsmittel (20) derart gestaltet sind, dass sie eine Anbringung der Befestigungsvorrichtung (16) an mindestens einer Sitzstrebe (12, 13) des Zweirades ermöglichen.

## Beschreibung

Die vorliegende Erfindung betrifft eine Befestigungsvorrichtung für die Anbringung eines Radschützers an einem Zweirad, insbesondere an einem Fahrrad, gemäß dem Oberbegriff des Anspruchs 1.

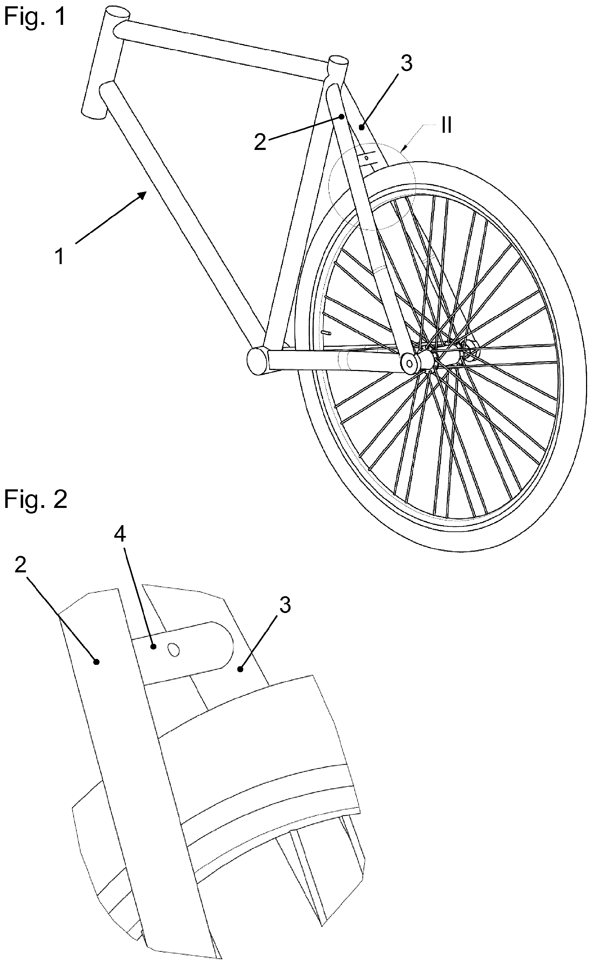

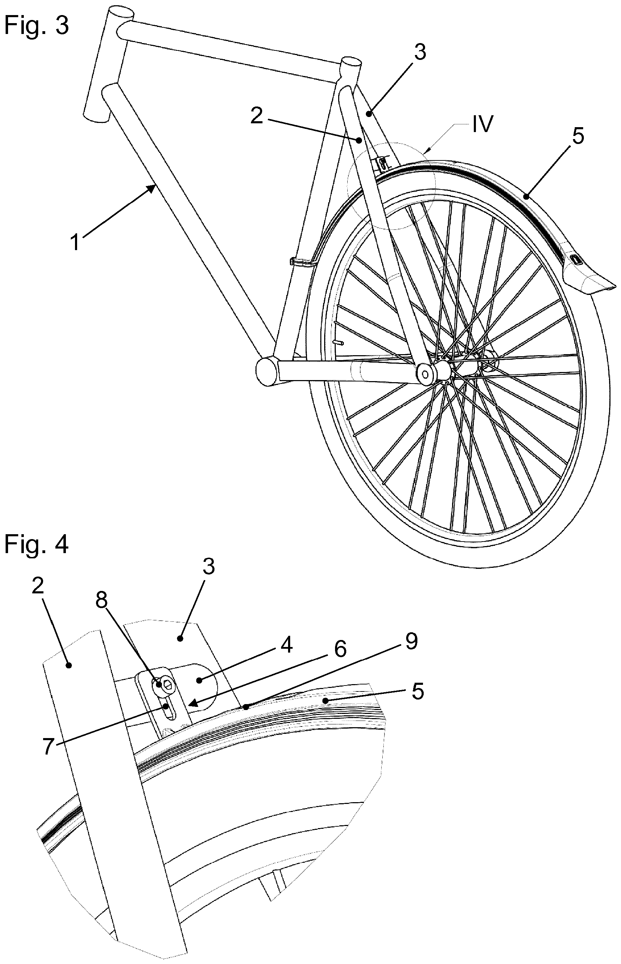

In den Fig. 1 bis Fig. 4 ist ein Fahrradrahmen 1 abgebildet, der zwischen den beiden Sitzstreben 2, 3 einen Quersteg 4 aufweist. An diesem Quersteg 4 werden in der Regel im Stand der Technik Radschützer 5 befestigt (siehe Fig. 3 und Fig. 4). Eine dazu dienende, insbesondere als Metallwinkel ausgebildete, Befestigungsvorrichtung 6 weist beispielsweise als erste Verbindungsmittel ein Langloch 7 für das Einschrauben einer Schraube 8 in den Quersteg 4 auf. Weiterhin sind in der Regel zweite Verbindungsmittel 9 beispielsweise in Form eines anschraubbaren Stegs vorgesehen, mit denen die Befestigungsvorrichtung 6 an dem Radschützer 5 angebracht ist.

Bei modernen Fahrrädern, insbesondere bei Rennrädern, Cyclocrossern und Gravelbikes, werden zunehmend Scheibenbremsen anstelle von Felgenbremsen verbaut. Dies hat zur Folge, dass vermehrt Rahmen gebaut werden, bei denen der Quersteg zwischen den Sitzstreben nicht vorhanden ist.

Das der vorliegenden Erfindung zugrunde liegende Problem ist die Schaffung einer Befestigungsvorrichtung der eingangs genannten Art, die für die Anbringung eines Radschützers an einem Rahmen eines Zweirads ohne Quersteg zwischen den Sitzstreben geeignet ist.

Dies wird erfindungsgemäß durch eine Befestigungsvorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die zweiten Verbindungsmittel derart gestaltet sind, dass sie eine Anbringung der Befestigungsvorrichtung an mindestens einer Sitzstrebe des Zweirades ermöglichen. Dadurch kann der Radschützer ohne die Zuhilfenahme eines Querstegs an dem Rahmen des Zweirads befestigt werden.

Es kann vorgesehen sein, dass die zweiten Verbindungsmittel derart gestaltet sind, dass sie eine gleichzeitige Anbringung der Befestigungsvorrichtung an zwei Sitzstreben des Zweirades ermöglichen. Durch die gleichzeitige Anbringung an beiden Sitzstreben ergibt sich eine stabilere Anbringung des Radschützers an dem Rahmen des Zweirads.

Es besteht die Möglichkeit, dass die ersten Verbindungsmittel eine Aufnahme, insbesondere eine schlitzförmige Aufnahme aufweisen, in die der seitliche Rand des Radschützers eingebracht werden kann. Dies stellt eine einfache und vielseitig anwendbare Anbringungsmöglichkeit dar.

Dabei können die ersten Verbindungsmittel Festlegmittel, insbesondere eine Bohrung und eine darin einbringbare Schraube, aufweisen, durch die der seitliche Rand des Radschützers in der Aufnahme festgelegt werden kann. Mittels der Schraube, die beispielsweise selbstschneidend durch einen Abschnitt des Radschützers hindurch geführt werden kann, wird eine sichere Befestigung des Radschützers an der Befestigungsvorrichtung gewährleistet.

Es kann vorgesehen sein, dass die zweiten Verbindungsmittel ein Anlageteil mit einer Anlagefläche, vorzugsweise jeweils ein Anlageteil mit einer Anlagefläche aufweisen, wobei die Anlagefläche an einer der Sitzstreben des Zweirades anliegen kann. Dabei können die zweiten Verbindungsmittel Anbringmittel aufweisen, die die Anlagefläche gegen eine der Sitzstreben des Zweirades drücken können. Die Anbringmittel können beispielsweise als um die Sitzstrebe herumführbares Band, insbesondere elastisches Band, oder als Kabelbinder oder dergleichen ausgebildet sein. Diese Gestaltung erlaubt eine einfache Verbindung der Befestigungsvorrichtung an einer beziehungsweise beiden Sitzstreben, wobei die Verbindung keine spezifischen Anbringstrukturen wie beispielsweise Bohrungen oder dergleichen an den Sitzstreben voraussetzt. Vielmehr können die Anbringmittel um unterschiedlich geformte Sitzstreben herumgeführt werden, um die Befestigungsvorrichtung an der Sitzstrebe zu befestigen.

Es kann vorgesehen sein, dass die zweiten Verbindungsmittel mindestens eine Öffnung aufweisen, durch die die Anbringmittel hindurchgeführt werden können, und/oder dass die zweiten Verbindungsmittel mindestens einen Vorsprung aufweisen, um die die Anbringmittel herumgeführt werden können. Auf diese Weise kann flexibel entschieden werden, wie die Anbringmittel an der Befestigungsvorrichtung angebracht werden.

Es besteht die Möglichkeit, dass die ersten Verbindungsmittel und die zweiten Verbindungsmittel derart, insbesondere gelenkig, miteinander verbunden sind, dass die Position der zweiten Verbindungsmittel relativ zu den ersten Verbindungsmitteln verändert und in der veränderten Stellung festlegbar ist. Auf diese Weise kann die Befestigungsvorrichtung an unterschiedliche Geometrien von Zweiradrahmen angepasst werden. Insbesondere kann die Befestigungsvorrichtung an mehr oder weniger weit voneinander beabstandeten Sitzstreben angebracht werden.

Es kann vorgesehen sein, dass die Befestigungsvorrichtung zwei Befestigungsteile, vorzugsweise zwei voneinander separate Befestigungsteile, umfasst, insbesondere wobei im montierten Zustand der Befestigungsvorrichtung ein erstes der Befestigungsteile mit einer ersten der Sitzstreben und ein zweites der Befestigungsteile mit einer zweiten der Sitzstreben verbunden ist. Durch das Vorsehen zweier, insbesondere separater, Befestigungsteile eignet sich die Befestigungsvorrichtung für unterschiedliche Breiten von Radschützern. Damit wird die Fertigung der Befestigungsvorrichtung beispielsweise als Spritzgussteil vereinfacht, weil nicht für jede unterschiedliche Breite von Radschützern eine darauf abgestimmte Spritzgussform verwendet werden muss.

Dabei kann ein jedes der beiden Befestigungsteile erste Verbindungsmittel und zweite Verbindungsmittel aufweisen. Insbesondere können bei mindestens einem der Befestigungsteile die ersten Verbindungsmittel und die zweiten Verbindungsmittel derart, insbesondere gelenkig, miteinander verbunden sind, dass die Position der zweiten Verbindungsmittel relativ zu den ersten Verbindungsmitteln verändert und in der veränderten Stellung festlegbar ist. Auch die einzelnen Befestigungsteile ermöglichen daher die Anpassung an unterschiedliche Geometrien von Zweiradrahmen.

Es kann vorgesehen sein, dass mindestens eines der Befestigungsteile ein Zwischenstück aufweist, über das die ersten Verbindungsmittel und die zweiten Verbindungsmittel miteinander verbunden sind. Dabei kann mindestens eines der Befestigungsteile eine gelenkige Verbindung zwischen dem Zwischenstück und den ersten Verbindungsmitteln und/oder zwischen dem Zwischenstück und den zweiten Verbindungsmitteln aufweisen. Die gelenkigen Verbindungen an dem Zwischenstück können die Anpassung an unterschiedlich weit voneinander entfernte Sitzstreben gewährleisten.

Dabei kann die mindestens eine gelenkige Verbindung zwischen dem Zwischenstück und den ersten Verbindungsmitteln und/oder zwischen dem Zwischenstück und den zweiten Verbindungsmitteln festlegbar sein, beispielsweise durch Schraubmittel. Auf diese Weise kann die Befestigungsvorrichtung in der an die Geometrie des Rahmens angepassten Konfiguration fixiert werden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine perspektivische Ansicht eines Fahrradrahmens mit einem Quersteg zwischen den beiden Sitzstreben;
- Fig. 2: ein Detail gemäß dem Pfeil II in Fig. 1;
- Fig. 3: eine perspektivische Ansicht des Fahrradrahmens gemäß Fig. 1 mit einem an dem Quersteg befestigten Radschützer;
- Fig. 4: ein Detail gemäß dem Pfeil IV in Fig. 3;
- Fig. 5: eine perspektivische Ansicht eines Fahrradrahmens ohne Quersteg zwischen den beiden Sitzstreben;
- Fig. 6: ein Detail gemäß dem Pfeil VI in Fig. 5;
- Fig. 7: eine perspektivische Ansicht des Fahrradrahmens gemäß Fig. 5 mit einem Radschützer und einer erfindungsgemäßen Befestigungsvorrichtung;
- Fig. 8: ein Detail gemäß dem Pfeil VIII in Fig. 7;
- Fig. 9: eine Rückansicht des Fahrradrahmens gemäß Fig. 7 mit dem Radschützer und der erfindungsgemäßen Befestigungsvorrichtung;
- Fig. 10: eine Schnittansicht des Fahrradrahmens gemäß Fig. 7 mit dem Radschützer und der erfindungsgemäßen Befestigungsvorrichtung;
- Fig. 11: eine Rückansicht des Radschützer und der erfindungsgemäßen Befestigungsvorrichtung in einer anderen als der in Fig. 9 abgebildeten Konfiguration;
- Fig. 12: eine Rückansicht des Radschützer und der erfindungsgemäßen Befestigungsvorrichtung in einer anderen als der in Fig. 9 und Fig. 11 abgebildeten Konfiguration;
- Fig. 13: eine perspektivische Ansicht eines Befestigungsteils einer erfindungsgemäßen Befestigungsvorrichtung;
- Fig. 14: eine Explosionsansicht des Befestigungsteils gemäß Fig. 13;
- Fig. 15: eine Seitenansicht des Befestigungsteils gemäß Fig. 13;
- Fig. 16: eine relativ zu Fig. 15 um 90° gedrehte Seitenansicht des Befestigungsteils gemäß Fig. 13;
- Fig. 17: einen Schnitt gemäß den Pfeilen XVII - XVII in Fig. 16.

In den Figuren sind gleiche oder funktional gleiche Teile mit gleichen Bezugszeichen versehen.

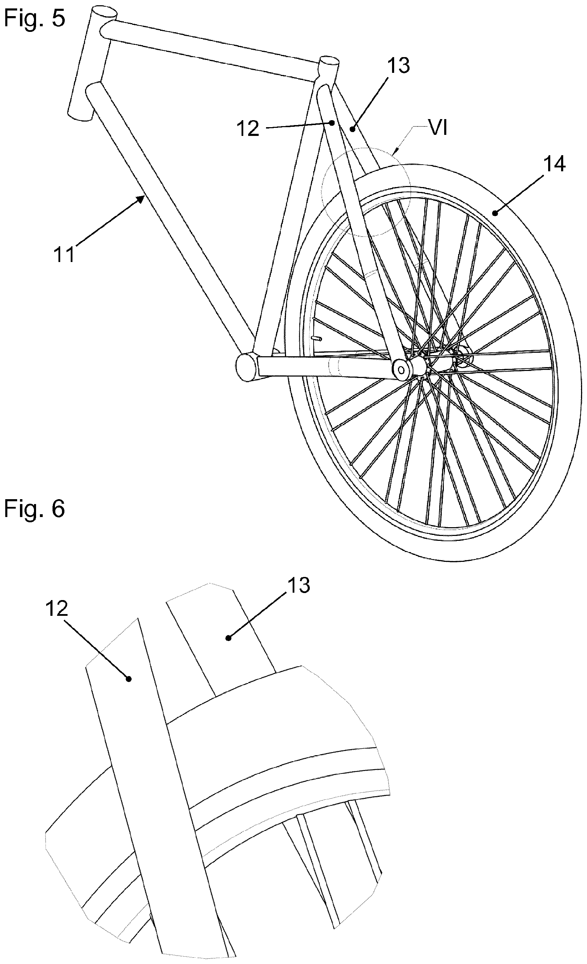

Fig. 5 bis Fig. 9 zeigen einen Rahmen 11 eines Fahrrads, bei dem zwischen den beiden Sitzstreben 12, 13 kein Quersteg vorgesehen ist. Der das Hinterrad 14 abdeckenden Radschützer 15 kann also nicht an einem Quersteg befestigt werden.

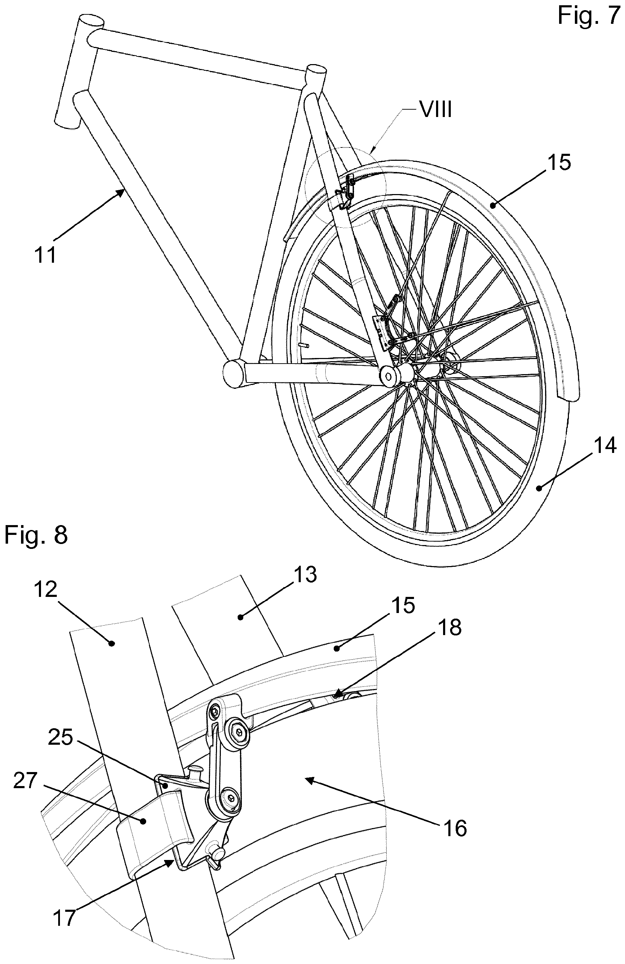

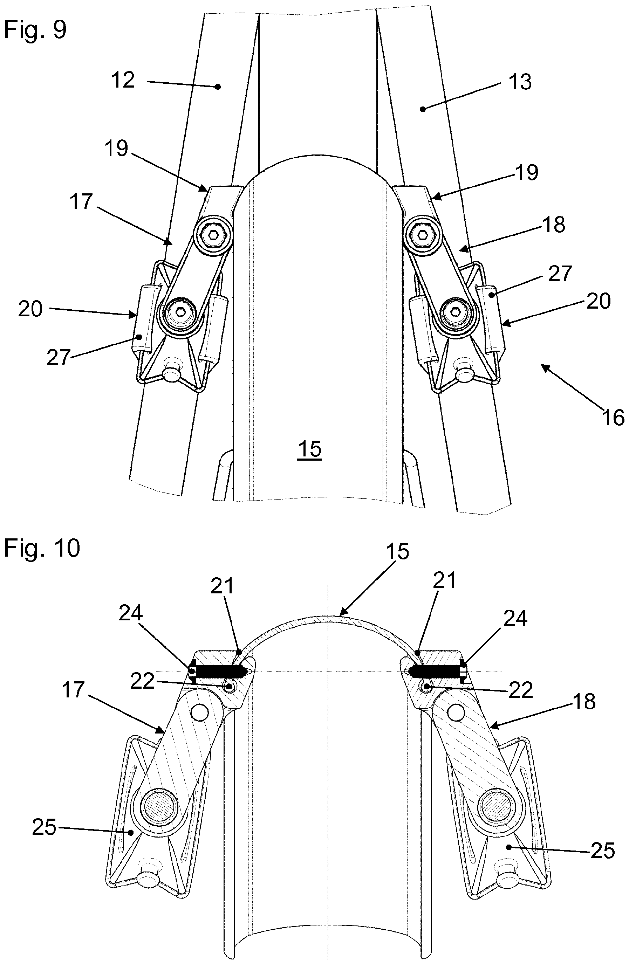

Die in den Fig. 7 bis Fig. 17 abgebildete Ausführungsform einer erfindungsgemäßen Befestigungsvorrichtung 16 umfasst zwei separate Befestigungsteile 17, 18 von denen jeweils eines an einer der Sitzstreben 12, 13 befestigt ist (siehe Fig. 9). Dazu weist jedes der Befestigungsteile 17, 18 erste Verbindungsmittel 19 für die Verbindung des Befestigungsteils 17, 18 mit dem Radschützer 15 sowie zweite Verbindungsmittel 20 für die Verbindung mit der entsprechenden Sitzstrebe 12, 13 auf.

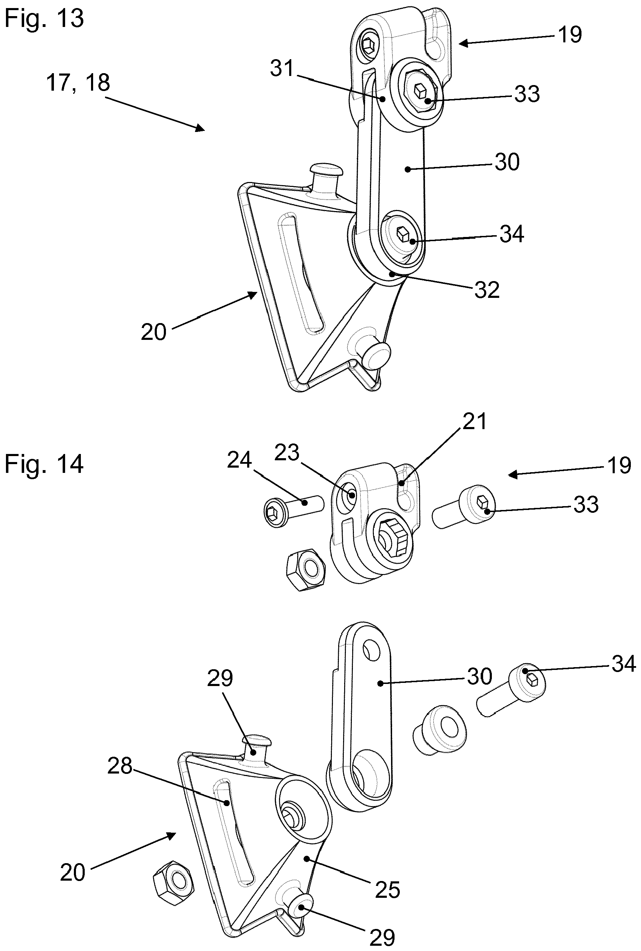

Aus Fig. 10 und Fig. 13 ist ersichtlich, dass die ersten Verbindungsmittel 19 eine schlitzförmige Aufnahme 21 aufweisen, in die der Rand 22 des Radschützers 15 eingebracht werden kann. Die ersten Verbindungsmittel 19 weisen weiterhin eine Bohrung 23 auf, in die eine sebstschneidende Schraube 24 so eingebracht werden kann, dass der in der Aufnahme 21 befindliche Rand 22 des Radschützers 15 in der Aufnahme 21 festgelegt wird (siehe Fig. 10). Dabei erstreckt sich die Schraube 24 sebstschneidend durch den Radschützer 15.

Es sind durchaus andere Möglichkeiten der Befestigung der ersten Verbindungsmittel an dem Radschützer möglich.

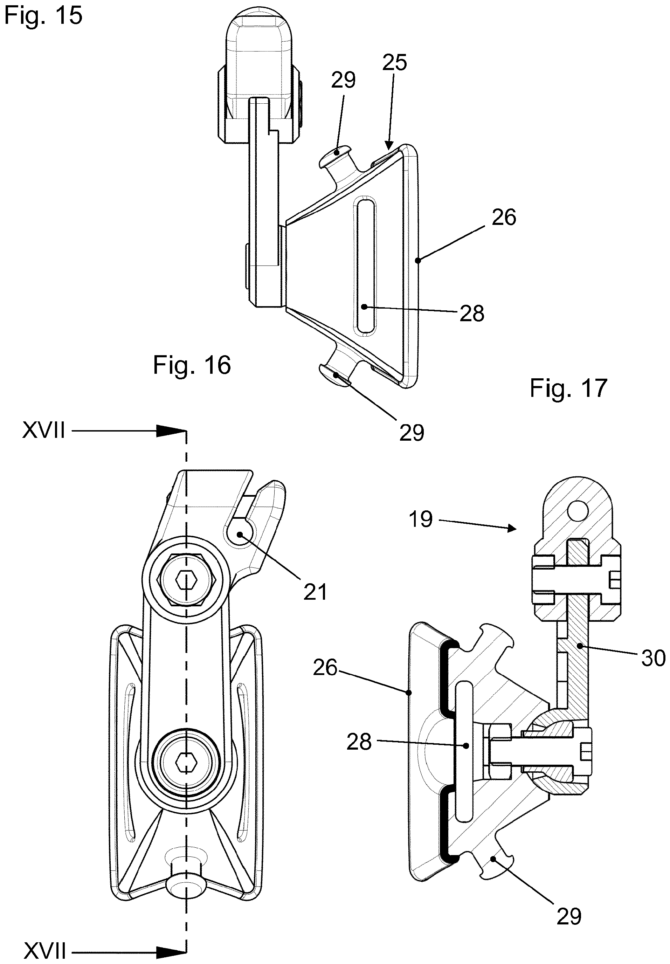

Die zweiten Verbindungsmittel 20 weisen ein Anlageteil 25 mit einer Anlagefläche 26 auf, die an einer der Sitzstreben 12, 13 des Zweirades anliegen kann (siehe beispielsweise Fig. 8 und Fig. 15). Die zweiten Verbindungsmittel 20 weisen weiterhin Anbringmittel auf, die die Anlagefläche 26 gegen eine der Sitzstreben 12, 13 des Zweirades drücken können.

In Fig. 8 und Fig. 9 sind beispielhafte Anbringmittel in Form eines Bandes 27 dargestellt, das insbesondere elastisch sein kann. Das Band 27 ist dabei durch zwei einander gegenüberliegende Öffnungen 28 des Anlageteils 25 hindurchgeführt. Das Band 27 kann beispielsweise an den die Sitzstreben 12, 13 umgreifenden Enden jeweils mit einem Klettabschnitt (nicht dargestellt) versehen sein, so dass das Band 27 mittels eines Klettverschlusses um die entsprechende Sitzstrebe 12, 13 geschlossen werden kann.

Anstelle eines Bandes 27, das durch die Öffnungen 28 hindurchragt, können alternativ oder zusätzlich weitere Anbringmittel vorgesehen sein. Beispiele für weitere Anbringmittel sind insbesondere Kabelbinder. Beispielsweise zeigt auch Fig. 15 an dem Anlageteil 25 zwei pilzförmige Vorsprünge 29, um die herum ein Band oder ein Kabelbinder oder dergleichen herumgelegt werden kann, um eine Verbindung des Anlageteils 25 mit der Sitzstrebe 12, 13 zu erreichen.

Ein jedes der Befestigungsteile 17, 18 weist ein Zwischenstück 30 auf, über das die ersten Verbindungsmittel 19 und die zweiten Verbindungsmittel 20 miteinander verbunden sind (siehe beispielsweise Fig. 13). Dabei ist jeweils eine gelenkige Verbindung 31, 32 zwischen dem Zwischenstück 30 und den ersten Verbindungsmitteln 19 sowie zwischen dem Zwischenstück 30 und den zweiten Verbindungsmitteln 20 vorgesehen. Diese Verbindungen 31, 32 können durch Anziehen von Schrauben 33, 34 in ihrer jeweiligen Stellung fixiert werden.

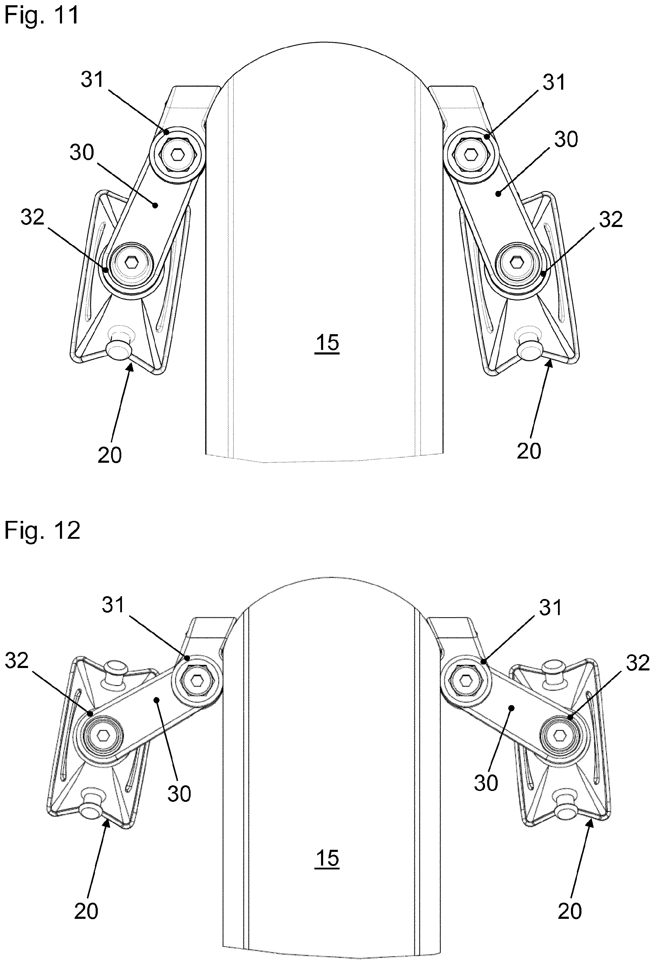

Durch das Vorsehen der gelenkigen Verbindungen 31, 32 kann der Abstand zwischen den zweiten Verbindungsmitteln 20 und den ersten Verbindungsmitteln 19 beziehungsweise dem Radschützer 15 verändert werden. Beispielsweise zeigt Fig. 11 eine Konfiguration der Verbindungsmittel 31, 32, in der die zweiten Verbindungsmittel 20 relativ nah an dem Radschützer 15 angeordnet sind, wohingegen bei der Konfiguration der Verbindungsmittel 31, 32 in Fig. 12 die zweiten Verbindungsmittel 20 relativ weit von dem Radschützer 15 entfernt sind.

Auf diese Weise kann die Befestigungsvorrichtung 16 an unterschiedliche Geometrien der Rahmen von Fahrrädern angepasst werden.

## Patentansprüche

1. Befestigungsvorrichtung (16) für die Anbringung eines Radschützers (15) an einem Zweirad, insbesondere an einem Fahrrad, umfassend
- erste Verbindungsmittel (19) für die Verbindung der Befestigungsvorrichtung (16) mit dem Radschützer (15), sowie
- zweite Verbindungsmittel (20) für die Verbindung der Befestigungsvorrichtung (16) mit dem Rahmen des Zweirades,
**dadurch gekennzeichnet, dass** die zweiten Verbindungsmittel (20) derart gestaltet sind, dass sie eine Anbringung der Befestigungsvorrichtung (16) an mindestens einer Sitzstrebe (12, 13) des Zweirades ermöglichen.

2. Befestigungsvorrichtung (16) nach Anspruch 1, **dadurch gekennzeichnet, dass** die zweiten Verbindungsmittel (20) derart gestaltet sind, dass sie eine gleichzeitige Anbringung der Befestigungsvorrichtung (16) an zwei Sitzstreben (12, 13) des Zweirades ermöglichen.

3. Befestigungsvorrichtung (16) nach einem der Ansprüche 1 oder 2, **dadurch gekennzeichnet, dass** die ersten Verbindungsmittel (19) eine Aufnahme (21), insbesondere eine schlitzförmige Aufnahme (21) aufweisen, in die der seitliche Rand (22) des Radschützers (15) eingebracht werden kann.

4. Befestigungsvorrichtung (16) nach Anspruch 3, **dadurch gekennzeichnet, dass** die ersten Verbindungsmittel (19) Festlegmittel, insbesondere eine Bohrung (23) und eine darin einbringbare Schraube (24), aufweisen, durch die der seitliche Rand (22) des Radschützers (15) in der Aufnahme (21) festgelegt werden kann.

5. Befestigungsvorrichtung (16) nach einem der Ansprüche 1 bis 4, **dadurch gekennzeichnet, dass** die zweiten Verbindungsmittel (20) ein Anlageteil (25) mit einer Anlagefläche (26), vorzugsweise jeweils ein Anlageteil (25) mit einer Anlagefläche (26), aufweisen, wobei die Anlagefläche (26) an einer der Sitzstreben (12, 13) des Zweirades anliegen kann.

6. Befestigungsvorrichtung (16) nach Anspruch 5, **dadurch gekennzeichnet, dass** die zweiten Verbindungsmittel (20) Anbringmittel aufweisen, die die Anlagefläche (26) gegen eine der Sitzstreben (12, 13) des Zweirades drücken können.

7. Befestigungsvorrichtung (16) nach Anspruch 6, **dadurch gekennzeichnet, dass** die Anbringmittel als um die Sitzstrebe herumführbares Band (27), insbesondere elastisches Band, oder als Kabelbinder oder dergleichen ausgebildet sind.

8. Befestigungsvorrichtung (16) nach einem der Ansprüche 6 oder 7, **dadurch gekennzeichnet, dass** die zweiten Verbindungsmittel (20) mindestens eine Öffnung (28) aufweisen, durch die die Anbringmittel hindurchgeführt werden können, und/oder dass die zweiten Verbindungsmittel (20) mindestens einen Vorsprung (29) aufweisen, um die die Anbringmittel herumgeführt werden können.

9. Befestigungsvorrichtung (16) nach einem der Ansprüche 1 bis 8, **dadurch gekennzeichnet, dass** die ersten Verbindungsmittel (19) und die zweiten Verbindungsmittel (20) derart, insbesondere gelenkig, miteinander verbunden sind, dass die Position der zweiten Verbindungsmittel (20) relativ zu den ersten Verbindungsmitteln (19) verändert und in der veränderten Stellung festlegbar ist.

10. Befestigungsvorrichtung (16) nach einem der Ansprüche 1 bis 9, **dadurch gekennzeichnet, dass** die Befestigungsvorrichtung (16) zwei Befestigungsteile (17, 18), vorzugsweise zwei voneinander separate Befestigungsteile (17, 18), umfasst, insbesondere wobei im montierten Zustand der Befestigungsvorrichtung (16) ein erstes der Befestigungsteile (17, 18) mit einer ersten der Sitzstreben (12, 13) und ein zweites der Befestigungsteile (17, 18) mit einer zweiten der Sitzstreben (12, 13) verbunden ist.

11. Befestigungsvorrichtung (16) nach Anspruch 10, **dadurch gekennzeichnet, dass** ein jedes der beiden Befestigungsteile (17, 18) erste Verbindungsmittel (19) und zweite Verbindungsmittel (20) aufweist.

12. Befestigungsvorrichtung (16) nach Anspruch 11, **dadurch gekennzeichnet, dass** bei mindestens einem der Befestigungsteile (17, 18) die ersten Verbindungsmittel (19) und die zweiten Verbindungsmittel (20) derart, insbesondere gelenkig, miteinander verbunden sind, dass die Position der zweiten Verbindungsmittel (20) relativ zu den ersten Verbindungsmitteln (19) verändert und in der veränderten Stellung festlegbar ist.

13. Befestigungsvorrichtung (16) nach einem der Ansprüche 11 oder 12, **dadurch gekennzeichnet, dass** mindestens eines der Befestigungsteile (17, 18) ein Zwischenstück (30) aufweist, über das die ersten Verbindungsmittel (19) und die zweiten Verbindungsmittel (20) miteinander verbunden sind.

14. Befestigungsvorrichtung (16) nach Anspruch 13, **dadurch gekennzeichnet, dass** mindestens eines der Befestigungsteile (17, 18) eine gelenkige Verbindung (31, 32) zwischen dem Zwischenstück (30) und den ersten Verbindungsmitteln (19) und/oder zwischen dem Zwischenstück (30) und den zweiten Verbindungsmitteln (20) aufweist.

15. Befestigungsvorrichtung (16) nach Anspruch 14, **dadurch gekennzeichnet, dass** die mindestens eine gelenkige Verbindung (31, 32) zwischen dem Zwischenstück (30) und den ersten Verbindungsmitteln (19) und/oder zwischen dem Zwischenstück (30) und den zweiten Verbindungsmitteln (20) festlegbar ist, beispielsweise durch Schraubmittel.
